# EUROPEAN PATENT APPLICATION

(11) **EP 1 594 270 A1**
(43) Date of publication of application: **09.11.2005**
(21) Application number: 05252755.3
(22) Date of filing: 04.05.2005
(51) Int. Cl.: H04L 12/58, H04L 29/06

(54) **A communication system for handling subscriber requests**

(30) Priority: 04.05.2004 GB 0409949
(71) Applicant: Nokia Corporation, 00045 Espoo (FI)
(72) Inventor: Kiss, Krisztian, Del Mar, California 92014 (US); Bajko, Gabor, 1202 Budapest (HU)
(74) Representative: Driver, Virginia Rozanne

(57) **Abstract**

In a communications network, a serving node configured to permit a user to subscribe to a plurality of resources anonymously, the serving node having a list of the resources and arranged to receive a subscribe request specifying the identity of the user that is requesting at least one of the resources, and in response thereto, to generate at least one subscription request to be sent to the requested resource, characterised in that the serving node is operable to generate the identity of the user and a preference of the identity of the user with the subscription request when the original subscribe request received from the user has a preference of the identity of the user.

## Description

The present invention relates to permitting a user to subscribe to resources, in particular, but not exclusively when the user wishes to remain anonymous to the resources.

The terminology 'instant messaging' has been broadly used to describe a number of communication services, wherein users of a communication network are able to communicate in a substantially real-time manner over a communication network.

Instant messaging over fixed line networks, for example the Internet, are well known. Broadly speaking, in this case instant messaging software enables desktop PC users to communicate with one another online in a substantially real-time environment. Instant messaging requires presence services to allow online users to monitor the relevant status of other users of the network. Such a service is typically supported by one or more servers. That is, typically, users will subscribe to a list of other users known as a 'buddy list' (i.e. typically comprises friends, family, etc.) which is maintained by a server (typically presence server). In this way, online status information and the ability to receive instant messages can be received as a result of a single subscription.

Instant messaging and presence is also being approached from the wireless communication network perspective. For example, Ericsson™, Motorola™ and Nokia™ have specifications in the form of 'Wireless Village' (WV) which is a mobile instant messaging and presence service (IMPS) formed to define and promote a set of universal specifications for IMPS. WV has now been integrated into the "Open Mobile Alliance" (OMA).

Presence values are used to reflect the status of a particular resource or user which is connected to the communication network. For example, for the desktop-based instant messaging service, the presence values could reflect that a user is active, absent, not willing to communicate, offline, etc.

The OMA are currently working on OMA SIP/SIMPLE presence enabler descriptions in an attempt to standardise specifications for mobile instant messaging and presence services.

Moreover, the internet engineering task force (IETF) has defined a specification using a session initiation protocol (SIP) for event notification (RFC3265). A further document entitled "A SIP Event Notification Extension for Resource Lists" has also been published by the IETF as a work-in-progress draft on 13 June 2003. This document describes using the SIP protocol to allow a user (or a subscriber) of a communication network to be notified of changes in the state of a particular resource in a communication network. Moreover, a resource list server (RLS) is described whose purpose is to store resource lists, for example a buddy list of resources that the user might wish to subscribe to, and to accept subscribe requests from a user.

However, this standard does not take into account the situation when a user wishes to subscribe to a plurality of resources anonymously (that is, without disclosing the identity of the user to the resources). Traditionally, if a user wanted to remain anonymous, it would be possible to do this if the user wanted to access a single resource directly, in which case the user sends a subscribe message to the resource, but which contains a "Privacy: id" header (also referred to simply herein as a privacy header) in the request as disclosed in RFC 3323. The document RFC 3325 also describes other privacy types which could also be included.

When a privacy header is present in a subscribe request, in accordance with the rules in the IP Multimedia Core Network System (IMS) and RFC 3325, the 'P-Asserted-Identity' header field sent from the user shall be removed when the request leaves the trusted domain, for example when entering a new network.

However, in a situation where a user wishes to subscribe to a plurality of resources, for example a buddy list, then the subscribe request is terminated by the RLS, which will then generate subscription requests to all the resources listed in the buddy list. For the current IMS specification (TS 24.229), the subscription request shall contain the P-Asserted-Identity (also referred to herein simply as the identity header) of the user on whose behalf the request is generated and therefore the user is not able to remain anonymous to the resources.

Therefore, it is an aim of an embodiment of the present invention to allow a user to send a subscription request to a plurality of resources, while still remaining anonymous.

According to a first aspect of the present invention, there is provided a communications network, a serving node configured to permit a user to subscribe to a plurality of resources anonymously, the serving node having a list of the resources and arranged to receive a subscribe request specifying the identity of the user that is requesting at least one of the resources, and in response thereto, to generate at least one subscription request to be sent to the requested resource, characterised in that the serving node is operable to generate the identity of the user and a preference of the identity of the user with the subscription request when the original subscribe request received from the user has a preference of the identity of the user.

According to a further aspect of the present invention there is provided a method for a user to subscribe to a plurality of resources anonymously via a communication network, the method comprising: maintaining at a serving node of the network a list of the plurality of resources; receiving from the user at the serving node a subscribe request specifying the identity of the user that is requesting at least one of the resources; generating at the serving node at least one subscription request for the resource requested in the subscribe request received from the user; and sending the subscription request to the requested resource; characterised in that the step of generating comprises generating the at least one subscription request with a preference of the identity of the user when the subscribe request received from the user includes a preference of the identity of the user.

According to yet a further aspect of the present invention there is provided a communication system for subscribing to a plurality of resources anonymously, the communication system comprising: a user terminal capable of generating a subscriber request for at least one of the resources, the subscriber request specifying the identity of the user and the user terminal capable of specifying in the request a preference of the identity of the user that is requesting at least one of the resources; a serving node for maintaining a list of the resources and arranged to receive the subscribe request from the user requesting the at least one of the resources, and in response thereto, the serving node generates at least one subscription request to be sent to the requested resource, wherein the serving node is operable to generate a preference of the identity of the user with the subscription request when the original subscribe request received from the user has a preference of the identity of the user.

For a better understanding of the present invention and to show how the same may be carried into effect, reference will now be made by way of example to the accompanying drawings in which;
Figure 1 shows a communication network having elements in accordance with an embodiment of the present invention;
Figure 2 shows a flow diagram of an example of message flows between different elements of the communication network according to an embodiment of the present invention;
Figure 3 shows a flow diagram of another example of message flows between different elements of the communication network according to an alternative embodiment of the present invention; Figure 4 shows a serving node according to an embodiment of the present invention; and
Figure 5 shows message flows for IMS.

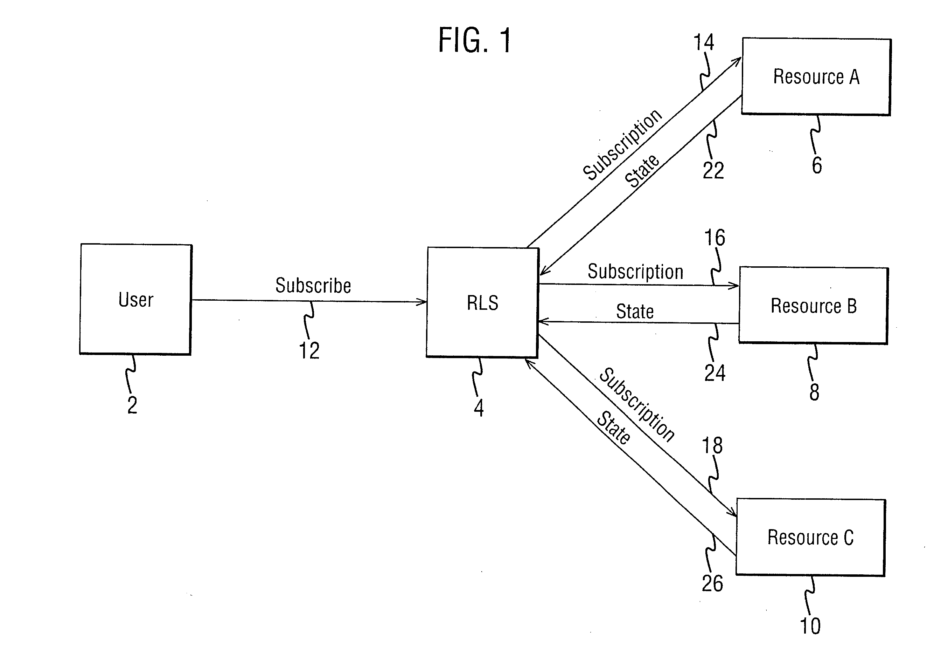

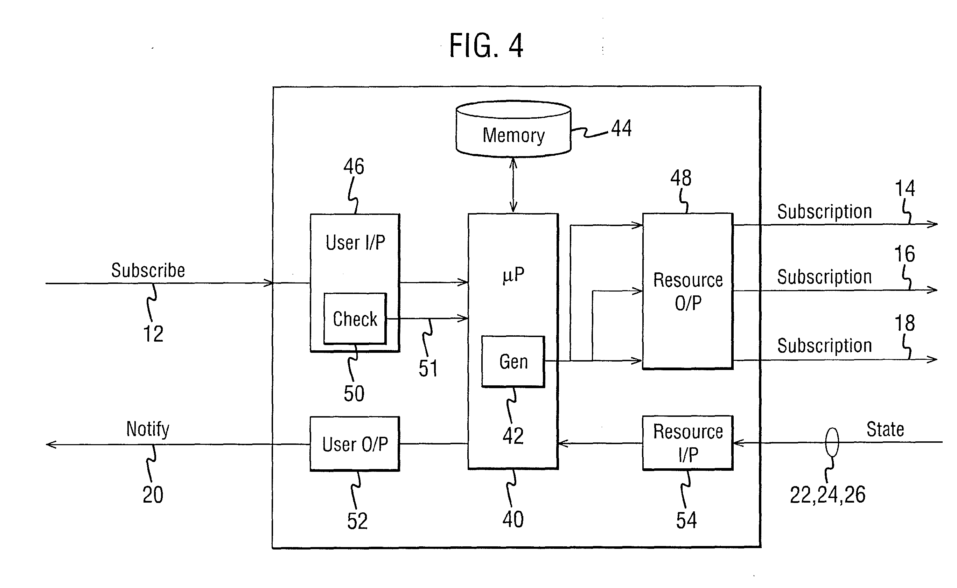

Figure 1 illustrates the context of an embodiment of the present invention, in which elements of a communication network are shown. In particular, a user 2 attempts to subscribe to a plurality of resources 6, 8 and 10, which is done via a resource list server (RLS) 4. That is, a user 2 sends a subscribe request 12 to the RLS 4. The subscribe request 12 could, for example, specify certain resources which it wishes to subscribe to or a buddy list. The RLS 4, which is shown in more detail in Figure 4, has a memory region 4 for storing such buddy lists or other resource lists. Each resource can be identified, for example by a uniform resource identifier (URI). Also, each resource list can be represented by a SIP URI. In this case, the list would contain a set of URIs, each of which represents a resource for which the subscriber wants to receive information. The resource list can exist in any domain and can be manipulated through a web page or through some other protocol (e.g. XCAP developed in IETF).

Once the URIs corresponding to the various resources in the buddy lists have been identified by the RLS 4, then in turn the RLS generates subscription requests 14, 16, 18 which are sent to the corresponding resource elements 6, 8, 10. These subscription requests could, for example, specify that the corresponding resource should notify the user 2 whenever a particular state in the resource changes if and when they occur, and return this information using the state change messages 22, 24, 26 to the RLS 4.

One of the primary functions of the RLS is to generate notification to the user 2 as the state of resources in the list changes. However, the way in which notify messages 20 are returned to the user 2 can differ, since it is at the discretion of the RLS whether it should buffer notifications of resource changes, and send the resource information to the subscriber in batches or individually. This allows the RLS 4 to provide rate limiting to the user. That is, the RLS element 4 can be set up such that it limits the number and/or frequency of notify messages 20 which the user receives.

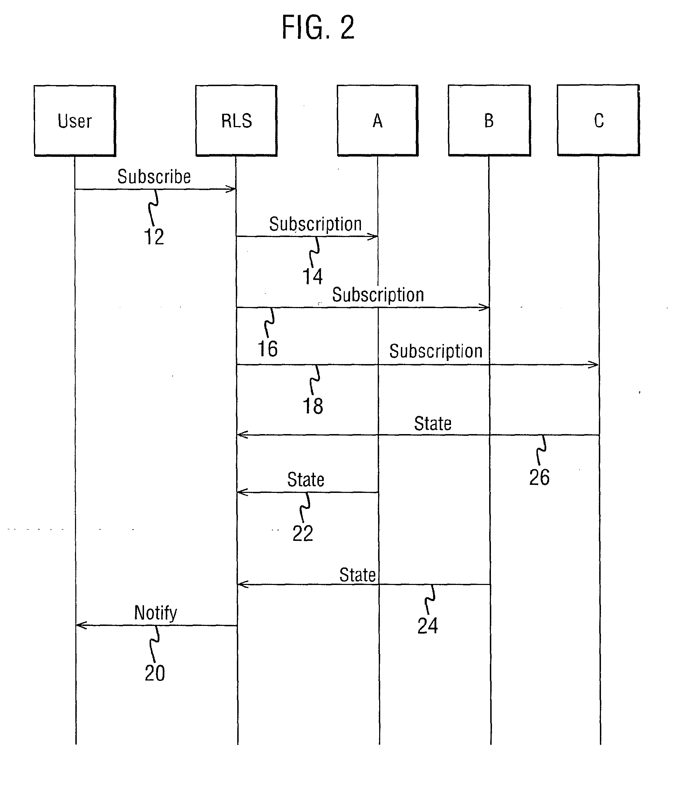

Figure 2 shows an example of an RLS 4 which has been set up to only supply a notify message in batches. That is, the notify message 20 will only be supplied once all of the resources 6, 8 and 10 have changed state. In this way, a batch of state information is supplied in the notify message 20 to a user 2.

The process is initiated with the user 2 sending a subscribe request 12 to the RLS 4. Upon receiving the subscribe request, the RLS 4 forwards a plurality of subscription messages 14, 16, 18 to the corresponding resources 6, 8, 10. The resources will change state at random different times. That is, resource C is shown in the example to change state at the earliest, at which time the state change message 26 is returned to the RLS 4. Next it is resource A which changes state and in turn a state change message 22 is sent to the RLS 4. Finally, at a later time, the resource B changes state and a state change message 24 is sent to the RLS 4.

After receiving the state change messages 22, 24, 26, the RLS can be programmed to trigger a notify message 20 which indicates to the user that, in the example, all of the states of the resource elements have now changed state and these state changes are notified to user 2.

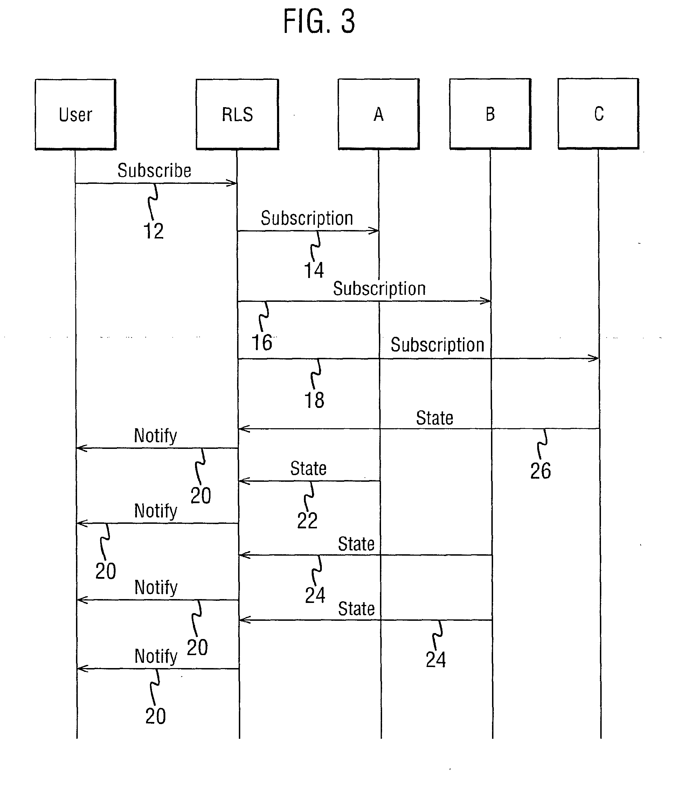

Figure 3 shows another example wherein notify messages 20 are now sent individually to the user 2 from the RLS 4. As before, the process is initiated when the user 2 sends a subscribe request message 12 to the RLS 4. In turn, the RLS sends a plurality of subscription messages 14, 16, 18 to corresponding resources 6, 8, 10. Thus, Figure 2 and Figure 3 are used merely as examples to show how different rate limitation policies can be setup in the RLS.

Thus, it can be seen that the resource C changes state first and in response thereto, a state changes message 26 is sent to the RLS 4. In turn, the RLS notifies the user 2 of this state change immediately by sending a notify message 20. At a later time, resource A changes state and a state change message 22 is sent to the RLS 4, which in turn notifies the user 2 immediately. At a later time, resource B changes state and the user is immediately notified of the state change. Finally, at the latest time, resource B again changes state and the user 2 is immediately notified of this further state change.

In case of an environment defined in RFC 3325 (e.g. IMS/MMD networks),the subscribe request messages 12 sent from the user 2 to the RLS contains a "P-Asserted-Identity" header which provides the identity of the user to the RLS 4. In turn, the RLS 4 will generate subscription messages 14, 16, 18 to each of the resources 6, 8, 10 which will also contain the P-Asserted-Identity header of the user.

Currently, if a user wants to subscribe to a resource anonymously, then an indication that privacy is expected (for example, using a "Privacy: id" header) is contained in the subscriber request. However, past systems have the drawback that when a privacy header is present in a request that is terminated by the RLS, then the privacy header is not considered when the RLS generates the subsequent subscription messages sent to the resources. Thus, the RLS would generate subscription messages which would contain the P-Asserted-Identity header field including the identity of the user without any accompanying privacy indication, and therefore the user will not be anonymous to the corresponding resources.

An embodiment of the present invention overcomes this by having circuitry 50 in the RLS, which identifies if the subscribe request message 12 from the user contains in the subscribe request an indication that privacy is required, and if so, generates subscription requests 14, 16 and 18 comprising an indication that privacy is sought. The indication that privacy is sought is according to one embodiment of the present invention in the form of a "Privacy: id" header. Other embodiments for indicating that privacy is sought can be for example those defined in relation to the privacy preferences detailed in RFC 3325, which for example can be one or more of the following "user", "header", "session" or "critical" preferences.

Thus, in one embodiment whenever the original subscribe request message 12 contains one indication in the form of a SIP header field, the corresponding subscription messages 14, 16, 18 which are sent to the resources from the RLS 4, will each be generated to contain a "Privacy: id" header of their own.

According to another embodiment of the present invention, the indication that privacy is sought is in the form of an XML (extensible markup language) schema which is comprised in the subscribe request message as shown in Annex 1. That is, Annex 1 shows an example "application/rls-privacy+xml" content type which uses Boolean parameters, i.e. "true" and "false" to indicate whether privacy is required. Also, the default value of the XML schema can be set to "false" so that if the "privacy" element in the XML document is not specified, it is assumed automatically that a "false" value is specified for that resource.

Annex 1 shows that the resource list *"sip:user1_list1@home1.net"* includes the following URIs:
*sip:bob@domain.com*
*sip:user2_public2@home2.net*
*sip:user3_public3@home3.net*

The "application/rls-privacy+xml" content type has been highlighted in Annex 1 and indicates to the RLS to set the "Privacy:id" header field in the outgoing subscription messages for *"sip:bob@domain.com" and* "*sip:user2_public2@home2.net*".

The default value is false and therefore by not indicating any preference for the "*sip:user3_public3@home3. net*", the privacy preference for the "*sip:user3_public3@home3.net*" resource is defaults to:
*Privacy id="false" uri=*"*sip:user3_public3@home3.net*"

Annex 2 shows the subscription messages generated for each of the resources with an XML content type according to an embodiment of the invention. It can be seen that a privacy preference is set for the subscription requests generated for the "*sip:bob@domain.com*" *and* "*sip:user2_public2@home2.net*" resources, but not for "*sip:user3_public3@home3.net*".

Annex 3 shows a listing where the XML schema can be genereralised (i.e. not necessarily restricted to the "Privacy:id" as defined in RFC 3325), but instead can also include other types of privacy preferences of the user, for example "user", "header", "session", "critical" as defined in RFC 3323. For example, Annex 4 shows that the "header" privacy type is used for the "*sip:bob@domain.com*" resource.

So-called "Privacy Service" functionality (as defined, for example in RFC 3323) is able to operate on the generated subscription requests to ensure that the identity of the user remains anonymous to the resources. This functionality can be distributed in the communication network or reside within or near the resources themselves. The Privacy Service receives the generated subscription messages and detects whether privacy preferences are present. An example of the Privacy Service functionality is the so-called Serving Call Session Control Function (S-CSCF) that checks whether the generated subscription requests contain a privacy header, in which case both the identity header (P-Asserted-Identity) and the privacy header are stripped from the subscription request for that resource so that the identity of the user remains anonymous to the resource. If on the other hand, the subscription request does not contain a privacy header, the identity header is retained in the request which is allowed to be received by the resource thereby revealing the identity of the user to the resource on purpose.

Figure 4 shows the RLS 4 according to an embodiment of the present invention. The RLS 4 is shown to comprise, for example, user input circuitry 46 to receive the subscribe request messages 12 from the user, which include the identity of the user (i.e. the P-Asserted-Identity header). The user input circuitry 46 further comprises checking circuitry 50, which is arranged to check the received subscribe request messages and to identify if these messages contain any privacy preferences. If, for example, the checking circuitry 50 identifies that a privacy preference is present in a subscribe request message, then a signal along line 51 is asserted and sent to processing circuitry 40. The processing circuitry receives subscribe request messages from the user and, if a corresponding signal along line 51 is asserted, then the processing circuitry 40 invokes generation circuitry 42 to generate the privacy preference for each of the subscription messages 14, 16, 18 which are sent to the resources 6, 8, 10 via resource output circuitry 48.

The processing circuitry 40 is also able to interface with memory 44, which, for example, contains lists of resources (such as buddy lists) and their associated URIs. Moreover, it will be appreciated that for the XML embodiment of the present invention it is also possible for the subscribe request to contain an indication from its buddy list as to which of the subscription messages generated by the RLS are to have privacy preferences attached with them. That is, in this way the privacy preference can be set one-by-one for everybody on the resource list.

The RLS 4 is also comprises resource input circuitry 54 for receiving state change messages 22, 24, 26 from the corresponding resources 6, 8, 10. These state change messages are delivered through the resource input circuitry 54 to the processing circuitry 40. The processing circuitry can be set up with the appropriate algorithms or circuitry to either provide notification messages to the user 2 in batches or individually (or some other mode).

Depending on the notification scheme which has been set up by the processing circuitry 40, the corresponding notify message 20 is output to the user through user output circuitry 52 in the RLS 4.

It should be appreciated that the resources of the present invention may take on a plurality of different forms including, for example, other subscribers. In particular, it is envisaged that embodiments of the present invention will find particularly useful implementation for wireless networks.

Typically, in such a wireless network, it is envisaged that the messages will be delivered using the SIP protocol, and
wherein the content type of these messages would use XML syntax. Examples of possible resources could be subscribers in the form of mobile phones, fixed desktops, servers, PDAs, etc. It should be appreciated that this list is non-limiting.

It should also be appreciated that embodiments of the present application find particular application for providing presence services in 3GPP/3GPP2 IMS/MMD networks as well as in the OMA Presence Enabler. It should also be appreciated that the user 2 is typically known as a "watcher" that wishes to subscribe to a "presencelist". Thus, embodiments of the present invention allow the watcher to insert the "application/RLS-privacy+XML' content type into its presencelist in the subscribe request when the watcher prefers the RLS to apply privacy preferences to all those subscriptions that the RLS issues. When the watcher prefers for the RLS to send out a subscribe request message anonymously for a particular URI of the presencelist, then the watcher sets "privacy=true" for that particular URI inside the "application/RLS-privacy+xml" content type. The URI in the "application/RLS-privacy+xml" content type may carry a domain. In this case, the privacy preference is propagated to all the resources that are in that domain. However, if no URI is inserted in the "application/RLS-privacy+xml" content type, then the privacy preference is propagated to all the resources in the presencelist, regardless of the domain.

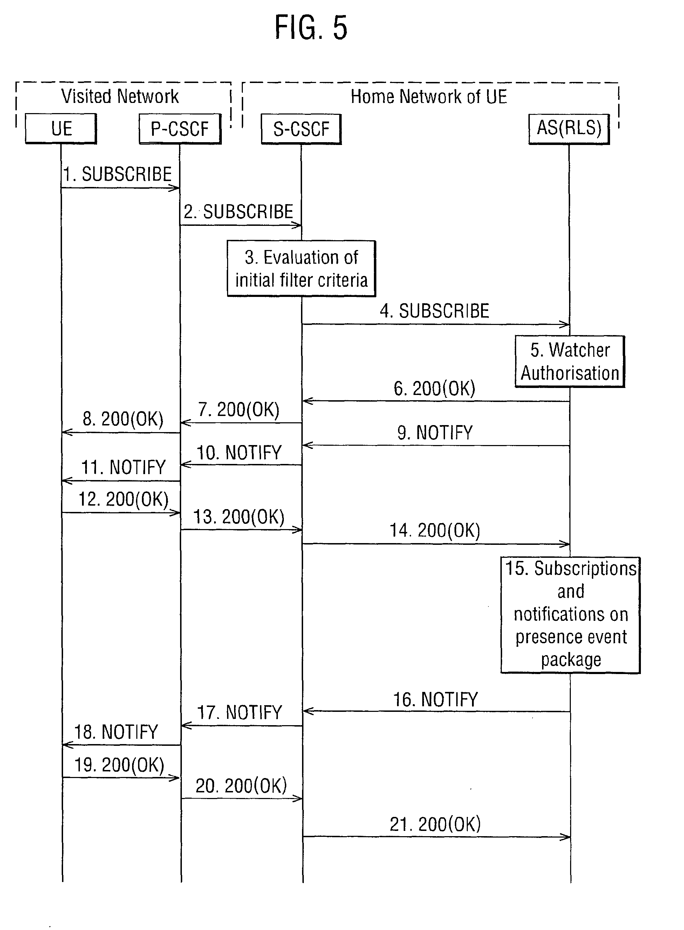

Figure 5 shows message flows for IMS details of which are provided briefly below, but a more detailed discussion of these can be found from the 3GPP TS 24.841 1.5.1 A.3.3.1 and A.3.4 standards. Also, it should be appreciated that these message flows can be generalised to a generic architecture which includes RFC 3261 SIP proxies.
1. SUBSCRIBE request (UE [User Equipment] to P-CSCF [Proxy Call Session Control Function])
2. SUBSCRIBE request (P-CSCF to S-CSCF [Serving Call Session Control Function])
3. Evaluation of initial filter criteria
4. SUBSCRIBE request (S-CSCF to RLS)
5. Authorisation of watcher
6. 200 (OK) response (RLS to S-CSCF)
7. 200 (OK) response (S-CSCF to P-CSCF)
8. 200 (OK) response (P-CSCF to UE)
9. NOTIFY request (RLS to S-CSCF)
10. NOTIFY request (S-CSCF to P-CSCF)
11. NOTIFY request (P-CSCF to UE)
12.200 (OK) response (UE to P-CSCF)
13.200 (OK) response (P-CSCF to S-CSCF)
14. 200 (OK) response (S-CSCF to RLS)
15. Subscriptions and notifications on presence event package
16. NOTIFY request (RLS to S-CSCF)
17. NOTIFY request (S-CSCF to P-CSCF)
18. NOTIFY request (P-CSCF to UE)
19.200 (OK) response (UE to P-CSCF)
20. 200 (OK) response (P-CSCF to S-CSCF)
21. 200 (OK) response (S-CSCF to RLS)

It should also be appreciated the RLS can handle a plurality of different subscribe requests from the same user, and/or from a plurality of other users.

## Claims

1. In a communications network, a serving node configured to permit a user to subscribe to a plurality of resources anonymously, the serving node having a list of the resources and arranged to receive a subscribe request specifying the identity of the user that is requesting at least one of the resources, and in response thereto, to generate at least one subscription request to be sent to the requested resource, **characterised in that** the serving node is operable to generate the identity of the user and a preference of the identity of the user with the subscription request when the original subscribe request received from the user has a preference of the identity of the user.

2. The communication network of claim 1, wherein in response to receiving the subscribe request, the serving node is arranged to generate a plurality of subscription requests to be sent to the corresponding resources.

3. The communication network of claim 1 or 2, wherein the preference of the identity of the user is a privacy preference indicating that the identity of the user is to be kept anonymous.

4. The communication network of claim 3, wherein the privacy preference is attached to the or each subscription request in an extensible markup language (XML) description format.

5. The communication network of claim 4, wherein the XML description format attached to the subscribe request specifies which of the subscription requests are generated with the privacy preference.

6. The communication network of claim 3, wherein the privacy preference is a privacy header in the or each subscription request.

7. The communication network of claim 3, wherein the privacy header in the subscribe request is in the form a SIP header field which automatically specifies that all of the subscription requests are generated with the privacy preference.

8. The communication network of claim 6, wherein the privacy header comprises at least one of user, header, session and critical preferences.

9. The communication network of any preceding claim, wherein the network further comprises control circuitry for receiving the or each subscription request and if it has a preference of the identity of the user then the control circuitry is operable to remove both the identity of the user and the preference of the identity of the user from the subscription request sent to the requested resource.

10. The communication network of any preceding claim, wherein the serving node has input circuitry arranged to receive at least one state message from the at least one resource when the resource changes state.

11. The communication network of any preceding claim, wherein the serving node has output circuitry arranged to transmit at least one notify message from the serving node notifying the user when the resource changes state.

12. The communication network of any preceding claim, wherein the communication network is a wireless communication network.

13. The communication network of any preceding claim, wherein the messages sent in the communication network use a session initiation protocol (SIP) format.

14. The communication network of any preceding claim, wherein the serving node has a memory for storing a list of resources, which is a buddy list of the user.

15. The communication network of claim 14, wherein the list of resources is identified by a uniform resource identifier (URI).

16. The communication network of any preceding claim, wherein the serving node is a resource list server and stores a presence list.

17. The communication network of any preceding claim, wherein the subscribe request is a SIP message having a application/rls-privacy+xml content type.

18. A method for a user to subscribe to a plurality of resources anonymously via a communication network, the method comprising:
maintaining at a serving node of the network a list of the plurality of resources;
receiving from the user at the serving node a subscribe request specifying the identity of the user that is requesting at least one of the resources;
generating at the serving node at least one subscription request for the resource requested in the subscribe request received from the user; and
sending the subscription request to the requested resource;
**characterised in that** the step of generating comprises generating the at least one subscription request with a preference of the identity of the user when the subscribe request received from the user includes a preference of the identity of the user.

19. A communication system for subscribing to a plurality of resources anonymously, the communication system comprising:
a user terminal capable of generating a subscriber request for at least one of the resources, the subscriber request specifying the identity of the user and the user terminal capable of specifying in the request a preference of the identity of the user that is requesting at least one of the resources;
a serving node for maintaining a list of the resources and arranged to receive the subscribe request from the user requesting the at least one of the resources, and in response thereto, the serving node generates at least one subscription request to be sent to the requested resource, wherein the serving node is operable to generate a preference of the identity of the user with the subscription request when the original subscribe request received from the user has a preference of the identity of the user.
